# EUROPÄISCHE PATENTSCHRIFT

(11) **EP 2 881 017 B1**
(45) Veröffentlichungstag und Bekanntmachung des Hinweises auf die Patenterteilung: **06.02.2019**
(21) Anmeldenummer: 14196059.1
(22) Anmeldetag: 03.12.2014
(51) Int. Cl.: A47J 31/52

(54) **Vorrichtung zur automatisierten Bereitung eines Heißgetränks**
Device for automated preparation of a hot drink
Dispositif de préparation automatisée d'une boisson chaude

(30) Priorität: 04.12.2013 DE 102013113497
(43) Veröffentlichungstag der Anmeldung: 10.06.2015
(73) Patentinhaber: Eugster/Frismag AG, 8580 Amriswil (CH)
(72) Erfinder: Fischer, Daniel, 8590 Romanshorn (CH)
(74) Vertreter: Patentanwälte Behrmann Wagner PartG mbB

(56) Entgegenhaltungen:
- EP-A2- 1 302 138
- WO-A2-01/12039
- DE-U1-202009 003 896
- GB-A- 2 451 508
- US-A1- 2003 129 286

## Beschreibung

Die vorliegende Erfindung betrifft eine Vorrichtung zur automatisierten Bereitung eines Heißgetränks.

Derartige Vorrichtungen sind beispielsweise in Form von gängigen Kaffee(voll-)automaten allgemein bekannt und setzen sich, neben Anwendungen der professionellen Gastronomie, zunehmend auch im Heim- und Bürobereich als attraktive Alternativen zu traditionellen Formen der Kaffeebereitung durch.

Am Beispiel der vollautomatischen Kaffeebereitung für den Privatbereich zeigen sich zudem maßgebliche technologische Fortschritte; nicht nur sind zunehmend leistungsfähigere Geräte (sogenannte Vollautomaten, welche Kaffeebohnen zunächst zu Kaffeemehl vermahlen und dann in einer geeigneten Brüheinheit das trinkfähige Heißgetränk fertig stellen) mit günstigen Kosten herstellbar und damit zunehmend für eine solche Zielgruppe attraktiv, auch wächst mit der steigenden Durchsetzung und Akzeptanz dieser Technologien das Verständnis von Verbrauchern für qualitativ hochwertigen Kaffee und dessen fachgerechte Zubereitung. Ergebnis ist ein steigendes Bedürfnis nach individuellen Konfigurations- und Parametrisierungsmöglichkeiten, denn während traditionell auf dem Gebiet der Gastronomie bzw. der professionellen Heißgerätezubereitung eine geeignete Auswahl und Einrichtung von Geräteparametern wie etwa ein Mahlgrad des Kaffeemehls oder eine Brühdauer dieses Kaffeemehls, Aufgabe fachlich geschulter Bedienpersonen ist (in diesem Zusammenhang wird auch der Begriff des Barista zunehmend populär) interessieren sich gleichermaßen anspruchsvolle private Verbraucher für derartige Möglichkeiten einer Erweiterung des Kaffeegenusses.

Entsprechend wächst das Angebot von leistungsfähigen, auch von privaten Verbrauchern benutz- und bedienbaren Geräten, welche eine Anpassung bzw. Parametrisierung der Betriebsfunktion an jeweils einzusetzende Rohmaterialen, etwa Kaffeebohnen, bzw. einen individuellen Geschmack ermöglichen. Allerdings ist die Handhabung und Einstellung derartiger, technologisch hoch entwickelter Heißgetränke-Bereitungsmaschinen komplex und erklärungsbedürftig; zudem nachteilig wirkt sich aus, dass eine unbeabsichtigte Fehlbedienung derartiger Vorrichtungen teuere Schäden verursachen kann.

Die kontinuierliche Weiterentwicklung und das Inverkehrbringen derartiger anspruchsvoller Heißgetränke-Geräte erzeugt entsprechend ein Dilemma für die Hersteller, deren Qualitätswahrnehmung auch von Wartungs- und Bedienfreundlichkeit sowie Fehleranfälligkeit beeinflusst wird: anspruchsvollere Technologie bei der Heißgetränkebereitung in Verbindung mit erweiterten Möglichkeiten der Einstellung und Parametrisierung verlangen bessere Schulung einer Bedienperson, gleichzeitig gilt zunehmend einfache, intuitive Bedienbarkeit als Qualitätskriterium eines derartigen Geräts, und die angesprochenen Zielgruppen divergieren stark zwischen technisch völlig unkundigen Anfängern einerseits und semi-professionellen, erfahrenen Bedienpersonen andererseits mit entsprechend völlig unterschiedlichen Erfordernissen einer Benutzeranleitung und Bedienerführung.

Im Ergebnis führen die eingangs beschriebenen technischen Fortschritte in der Konfigurier- und Einstellbarkeit hochwertiger Kaffeevollautomaten als typischen Vertretern von Heißgetränke-Bereitungsvorrichtungen der gattungsgemäßen Art zu der Problematik, dass eine Benuterführung und - anleitung bereitzustellen ist, welche für das breite Spektrum der angesprochenen Personen geeignet ist, damit gleichermaßen aus Benutzersicht eine schnelle und einfache Bedienung des Heißgetränke-Bereitungsgeräts sicherstellt, wie auch mögliche schadensträchtige Bedienfehler effektiv vermeidet. Es wird deutlich, dass typisch klassische Ansätze mittels (gedruckter) Anleitungen für diesen Zweck nur sehr begrenzt geeignet sind, zudem sinkt die Bereitschaft von gerade privaten Bedienpersonen elektrischer Hausgeräte zum Studium derartiger gedruckter Anleitungen ständig.

Während es zudem als aus dem Stand der Technik allgemein bekannt vorauszusetzen ist, elektronische Steuereinheiten (auch drahtlos) mit Kaffeemaschinen zu verbinden, insbesondere in einem Systemumfeld, setzen gleichwohl auch derartige Ansätze einer Fernsteuerung von Heißgetränke-Bereitungsvorrichtungen tiefgehende Kenntnisse in einer jeweiligen Ansteuerung und Bedienung voraus.

Aus dem Stand der Technik gemäß EP 1 302 138 A2 ist eine Vorrichtung zur automatisierten Bereitung eines Heißgetränks mit in einem Vorrichtungsgehäuse vorgesehenen Steuermitteln bekannt, die so ausgebildet sind, dass in einem ersten Betriebsmodus der Bereitungsvorrichtung als Reaktion auf ein bevorzugt manuelles Betätigen eines am Vorrichtungsgehäuse vorgesehenen Aktivierungselements durch eine Bedienperson die Bereitung des Heißgetränks unter Nutzung voreingestellter gespeicherter Parameter erfolgt und dass in einem zweiten Betriebsmodus der Bereitungsvorrichtung die Parameterdaten durch eine Bedienperson verändert werden können. Bei dieser bekannten Vorrichtung weisen die Steuermittel Mittel zur elektronischen Datenkommunikation mit einer gehäuseextern vorsehbaren Datenverarbeitungseinheit sowie Individualisierungs- und Speichermittel für mindestens einen Parameterdatensatz der Parameterdaten auf.

Zum weiteren Stand der Technik wird verwiesen auf die US 2003/129 286 A1, die DE 20 2009 003 896 U1, die GB 2 451 508 A sowie die WO 01/12038 A2.

Aufgabe der vorliegenden Erfindung ist es daher, eine gattungsgemäße Vorrichtung zur automatisierten Bereitung eines Heißgetränks im Hinblick auf ihre Bedienbarkeit zu verbessern, dabei insbesondere die Voraussetzungen dafür zu schaffen, dass effizient, mit geringem Zeitaufwand und möglichst betriebssicher Bedienpersonen verschiedenster technischer Vorbildungen und Anwendungskenntnisse das Heißgetränke-Bereitungsgerät erfolgreich bedienen können und bei dieser Bedienung nicht nur, mittels des ersten Betriebsmodus, das Heißgetränk durch Betätigen des Aktivierungselementes und das damit veranlasste Starten des automatisierten Bereitungsvorgangs abrufen können, vielmehr soll die Bedienperson in die Lage versetzt werden, zielgerichtet geeignete Parameterdaten im zweiten Betriebsmodus einstellen und verändern zu können, um so einen individuellen, qualitativ hochwertigen Heißgetränkegenuss zu ermöglichen. Aufgabe der vorliegenden Erfindung ist es ferner, eine derartige Anleitung bzw. Führung der Bedienperson im ersten und im zweiten Betriebsmodus mit geringem Geräteaufwand zu realisieren, mit dem Zweck, die Vorrichtungen zur automatisierten Bereitung von Heißgeträn ken auch großserientauglich und kostengünstig für private Zielgruppen herstellen und anbieten zu können.

Die Aufgabe wird durch die Vorrichtung zur automatisierten Bereitung eines Heißgetränks nach dem Hauptanspruch gelöst; vorteilhafte Weiterbildungen der Erfindung sind in den Unteransprüchen beschrieben.

In erfindungsgemäß vorteilhafter Weise sind die im Vorrichtungsgehäuse der Heißgetränk-Bereitungsvorrichtung (also etwa in der bevorzugten Realisierung als Kaffee-Vollautomat) vorgesehenen Steuermittel mit Mitteln zur drahtlosen elektronischen Datenkommunikation versehen, so dass diese mit einer gehäuseextern vorsehbaren, bevorzugt mobilen Datenverarbeitungseinheit zusammenwirken können. Gleichermaßen vorteilhaft weisen die erfindungsgemäßen Steuermittel Individualisierungs- und Speichermittel auf, welche das Erfassen und Speichern mindestens eines Parameterdatensatzes (etwa das Bereiten eines Kaffee-Heißgetränks entsprechend einer ersten, bevorzugt auszuwählenden Rezeptur) in Verbindung mit benutzerindividualisierenden Benutzerdaten ermöglicht. Im Rahmen der Erfindung ist dies in zweifacher Hinsicht günstig und synergistisch: zum einen ermöglicht eine derartige Ausgestaltung der Steuermittel durch elektronische Datenkommunikation nach extern, dass eine potenziell aufwändige Parametrisierung bzw. Auswahl und Einstellung von Betriebsdaten entsprechend der Parameterdaten nicht mehr durch am bzw. im Gehäuse der Heißgetränkevorrichtung vorzusehende Bedienelemente bzw. (visuelle) Schnittstellenelemente erfolgen muss; vielmehr können für diese Zwecke die (typischerweise geeignet programmierbare) Eigenschaften generischer und über gängige Datenübertragungstechnologien anbindbarer und typischerweise mobiler Datenverarbeitungseinheiten benutzt werden, wie sie etwa in Form von Smartphones, Tablet-Computern oder dergleichen vorliegen und in Form üblicher Protokolle über Bluetooth, W-LAN oder dergleichen Drahtlos-Technologien standardisiert, betriebs- und fehlersicher und kostengünstig anbindbar sind. Unmittelbarer Vorteil ist, dass die Nutzung einer derartigen, externen und bevorzugt mobilen Datenverarbeitungseinheit (welche zunächst im Rahmen der Erfindung nicht notwendiger Weise selbst Teil der Erfindung sein muss) den Hardware- und Softwareaufwand für die eigentliche Vorrichtung drastisch vermindert und auf die Einrichtung bzw. Ausgestaltung der erfindungsgemäßen Steuermittel der diesen zugeordneten Datenkommunikationsmittel reduziert.

Zum anderen bietet diese Technologie den Vorteil, dass benutzerspezifisch (bzw. benutzer-individualisierend und insoweit mit der Möglichkeit zur unmittelbaren Berücksichtigung von Anforderungen und Voraussetzungen eines jeweiligen Benutzers, insoweit dem Benutzer zugeordnet und typischerweise lokal bzw. örtlich benachbart der Heißgetränk-Bereitungsvorrichtung) eine Unterstützung bzw. Führung der Bedienperson sowohl bei der Einrichtung und Parametrisierung, als auch im Zusammenhang mit der eigentlichen Bedienung ermöglicht ist. In erfindungsgemäß vorteilhafter Weise ermöglichen es nämlich die Individualisierungs- und Speichermittel, für einen jeweiligen Benutzer als Bedienperson (bevorzugt und weiterbildend im Rahmen der Erfindung für eine Mehrzahl derartiger individualisierter Benutzer) jeweils ausgewählte und gewünschte Betriebsparameter zu speichern, wobei die vorliegende Erfindung durch die Möglichkeit einer (bevorzugt drahtlosen) Einbindung der externen Datenverarbeitungseinheit nicht nur auf diesem Wege diese individualisierten Betriebsparameter empfangen kann, sondern zusätzlich individuell und eingehend auf Voraussetzungen und Bedürfnisse der Bedienperson diese durch den (komplexen) Parametrisierungsvorgang führen kann. Ergebnis ist, dass etwa auch ungeschulte Laien durch spezifische, ausführliche elektronische Unterstützung und Führung im Konfigurationsprozess in die Lage versetzt werden, einem jeweiligen Geschmack entsprechend hochwertige Heißgetränke automatisiert bereiten zu lassen und, ohne dass Bedienfehler zu erwarten sind und ohne dass etwa aus subjektiver Sicht unverständliche (da unspezifische) Anweisungen bzw. Bedienungsanleitungen die Akzeptanz des erfindungsgemäßen Geräts beim jeweiligen Nutzer beeinträchtigen.

Nach erfolgter (bevorzugt geeignet spezifisch Benutzer-geführter) Einstellung bzw. Parametrisierung, ist es dann durch die vorliegende Erfindung ermöglicht, mit minimierten Bedien- bzw. Schnittstellenmitteln am eigentlichen Gerät (bzw. Vorrichtungsgehäuse), etwa lediglich durch das bevorzugt als Schalter, Bedienknopf oder Taster ausgestaltete Aktivierungselement, den Getränke-Bereitungsvorgang im ersten Betriebsmodus auszulösen, wobei eine bevorzugte Weiterbildung der Erfindung vorsieht, dass mangels abweichender, geänderter Parametrisierungen ab dem Zeitpunkt der ersten Einstellung durch die Bedienperson jeweils kontinuierlich der ausgewählte Parametersatz in die Getränkebereitung einfließt. Mit anderen Worten, eine nachfolgende, zukünftige Bedienung kann sich auf das Betätigen eines einzelnen Bedienungselementes beschränken, dürfte somit als extrem praktisch und bedienungsfreundlich wahrgenommen werden, dabei in der beabsichtigten Weise gleichwohl gründlich kalibriert das Heißgetränk bereiten.

Dabei ist die Eigenschaft der erfindungsgemäßen Lösung hervorzuheben, diese Bereitung individualisiert sowohl geräte- als auch potenziell nutzerspezifisch durchzuführen: wird etwa die vorliegende Erfindung durch geeignete Mittel zur Identifikation einer Bedienperson weitergebildet (was durch gängige drahtlose Technologien, wie sie etwa im Zusammenhang mit Automobil-Öffnungssystemen oder dergleichen ohne weiteres bekannt ist) verbunden, würde ein Kaffeeautomat bereits durch das Erkennen des betreffenden Bedieners (bei zuvor erfolgter Einstellung zugehöriger Parameter) in der Lage sein, als Reaktion auf das Betätigen des Aktivierungselementes das spezifisch gewünschte Getränk zu bereiten, insoweit höchsten Individualisierungsgrad mit maximaler technologischer Einfachheit und Bedienbarkeit kombinieren; technologisch wäre damit der erfahrene Barista, welcher in einer Kaffeebar den Kaffee-Stammkunden erkennt und diesem das gewohnte Getränk bereitet, technologisch äquivalent und apparativ realisiert.

Vorteilhafte Weiterbildungen der Erfindung sehen entsprechend vor, die erfindungsgemäßen bidirektionale Mittel zur Datenkommunikation so auszugestalten, dass diese neben einem Datenkommunikationsbetrieb mit der gehäuseextern vorsehbaren Datenverarbeitungseinheit auch die Benutzeridentifikation vornehmen können, etwa anhand einer konkreten apparativen Identifikation eines Mobiltelefons oder dergleichen typischen Ausgestaltung für die (mobile) Datenverarbeitungseinheit, etwa anhand einer MAC-Adresse oder dergleichen apparativer Erkennung. Alternativ würde ergänzend eine derartige Identifikation auch im Rahmen anderer Identifikationstechnologien erfolgen, auch unter aktiver Einbeziehung des Benutzers, welcher etwa einen entsprechenden Gerätedialog auf der mobilen Datenverarbeitungseinheit durchführt. Unabhängig von dieser Technologie ist dabei die erfindungsgemäße drahtlose Ankopplung, welche gleichermaßen über Bluetooth oder dergleichen Technologien, wie auch über Wireless-LAN-Technologien erfolgen kann, und in diesem Fall die Verbindung entweder im Rahmen ohnehin bestehender W-LAN-Infrastrukturen oder aber einer (weiter bevorzugt situativen) Punkt-zu-Punkt-Verbindung zu realisieren ist).

Apparativ ist es im Rahmen bevorzugter Ausführungsformen der Erfindung bevorzugt, zum Lösen der technischen Aufgabe einer Hardwareminimierung am bzw. im Vorrichtungsgehäuse die Zahl bzw. Ausgestaltung von Benutzerschnittstellen bzw, Bedieneinheiten zu minimieren und zu vereinfachen; im bevorzugten Idealfall enthält das Vorrichtungsgehäuse keine visuellen Darstellungsmittel mehr für eine Benutzerinteraktion, wobei bevorzugt insbesondere auf jegliches Display zu einer zweidimensionalen Bilddarstellung zu verzichten ist; alternative Varianten gleichwohl Leuchtelemente, etwa zur Abgabe von leuchtenden Quittungsmustern als Reaktion auf eine erfolgreiche oder fehlerhafte Betätigung, ergänzend oder alternativ auch integriert in den erfindungsgemäßen Schalter oder Knopf als Aktivierungselement, vorsehen.

In der Art eines die Erfindung weiterbildenden Systemgedankens (wobei für ein System bestehend aus der hauptanspruchsgemäßen Vorrichtung samt mindestens einer der gehäuseextern vorsehbaren Datenverarbeitungseinheiten gleichermaßen Schutz beansprucht wird) ist die (mobile) Datenverarbeitungseinheit unter Nutzung gängiger Darstellungs-, Programmier- und Kommunikationstechnologien, etwa als Smartphone, Tablet-Computer oder dergleichen Mobileinheit, mit dem Gehäuse kombiniert. So ermöglicht etwa die geeignet programmierbare und damit eine ideale Benutzerunterstützung anbietende Displayeinheit einer durch die (mobile) Datenverarbeitungseinheit angebotenen grafischen Benutzeroberfläche das einfache, benutzerspezifische Darstellen von Medieninhalten zur Benutzerführung; etwa in Form geeigneter Visualisierungen auf dem mobilen Display kann damit die Bedienperson, weiter bevorzugt unter Berücksichtigung ihrer jeweiligen Erfordernisse, Vorkenntnisse und Interessen, sowohl zur individuellen Parametrisierung der Heißgetränke-Bereitungsvorrichtung angeleitet werden, als auch selbst unmittelbar diese Parametrisierung in Form geeigneter Schnittstellenbetätigungen, etwa in ansonsten bekannter und durchgesetzter Art exemplarisch als Touch-Bedienflächen auf einem berührungsempfindlichen Display realisiert, vornehmen. Die geeignet programmierbare Datenverarbeitungsvorrichtung stellt dann das Ergebnis dieser Parametrisierung nicht nur in tauglicher Form drahtlos der Heißgetränke-Bereitungsvorrichtung bereit (eingeschlossen eine geeigneten Audio- und/oder visuellen Quittierung bzw. Bestätigung über ein derartiges Display), auch kann eine technischinhaltliche Prüfung auf Bedienfehler, Machbarkeit im Betrieb und der gleichen ebenso erfolgen, wie etwa eine Unterstützung dieses bedienerfreundlichen Betriebs durch die wiederum weiterbildungsgemäß vorgesehenen Zusatzdaten: so sieht eine besonders geeignete und bevorzugte Weiterbildung der Erfindung vor, über die konkrete Geräteparametrisierung hinaus den Benutzer mit geeigneten Hintergrundinformationen zu versorgen (etwa betreffend die Hintergründe einer jeweiligen Parametrisierungs- bzw. Einstellentscheidung) und deren Auswirkungen. Auch ermöglichen es die im Rahmen von vorteilhaften Weiterbildungen der Erfindung, über ein öffentliches Datennetz, etwa das Internet, von einer externen Servervorrichtung heranführbare Zusatzdaten, besonders geeignet Rezepte, Erfahrungen Dritter oder dergleichen, in einen aktuellen Bedienungs-, Anleitungs- sowie Parametrisierungsprozess einfließen zu lassen, so dass, wiederum günstig aus Nutzersicht und zur Erhöhung der Geräteakzeptanz, das subjektiv wahrgenommene Erlebnis im Umgang mit der Technologie positiv unterstützt und verbessert werden kann.

Zusätzlich weiterbildend und vorteilhaft im Rahmen der Erfindung ist es durch die Ausgestaltung der erfindungsgemäßen elektronischen Datenkommunikationsmitteln im Zusammenwirken mit der extern angebunden mobilen Datenverarbeitungseinheit (und unter Nutzung deren etwa öffentlicher Telekommunikationseigenschaften) ermöglicht, Daten betreffend den Bedienvorgang durch die Bedienperson, etwa darin zum Ausdruck kommende Präferenzen, Bedürfnisse, Entscheidungs- und Fehlermuster oder dergleichen, wiederum netzextern in einer geeigneten Servereinheit zu erfassen, daraus Erkenntnisse für eine Verbesserung von Bedien- und Benutzerführungsprozessen zu gewinnen und so für eine kontinuierliche Optimierung zu sorgen.

Wiederum unabhängig von einem solchen Ansatz, alternativ auch im Rahmen unmittelbarer Weiterbildungen dieser Technologie, sieht die vorliegende Erfindung weiterbildend vor, dass auch Betriebsdaten, wie etwa Ergebnis-, Fehler-, Protokoll- oder Betriebsmitteldaten erfasst und über das öffentliche Datenübertragungsnetz serverseitig erfasst werden können, weiter vorteilhaft in Verbindung mit den jeweiligen benutzerindividualisierenden Benutzerdaten. Hieraus ergeben sich dann wiederum Möglichkeiten, dem Benutzer etwa unmittelbare Hinweise oder Vorschläge für eine bevorstehende Wartung, für Verbesserungen oder dergleichen zu geben, prinzipiell sind auch Schritte einer Fernkonfiguration bzw. Fernwartung durch die externe Servereinheit (über die mit der Heißgetränke-Bereitungsvorrichtung verbundene mobile Datenverarbeitungseinheit) ermöglicht.

Im Ergebnis erreicht die vorliegende Erfindung in überraschend einfacher und wirksamer Weise eine Überwindung des sich aus dem Stand der Technik und einer kontinuierlichen technischen Weiterentwicklung ergebenen Dilemmas, dass nämlich eine aus Nutzersicht wünschenswerte Einstellbarkeit und Parametrisierbarkeit hochwertiger Heißgetränke-Bereitungsvorrichtungen nicht notwendiger Weise mit ständig komplexer werdenden Bedienungsanleitungen einhergehen muss. Vielmehr gestattet es die vorliegende Erfindung, benutzerindividuell zugeschnittene bzw. zuschneidbare Bedienerführung mit deutlich vermindertem Hardwareaufwand so zu verknüpfen, dass individueller (und individuell wahrgenommener) Heißgetränkegenuss zuverlässig und unter Minimierung von Bedienungsfehlern an eine breite (und auch potenziell kostensensible) Kundengruppe gerichtet werden kann.

Weitere Vorteile, Merkmale und Einzelheiten der Erfindung ergeben sich aus der nachfolgenden Beschreibung bevorzugter Ausführungsbeispiele sowie anhand der einzigen Figur; diese zeigt in:

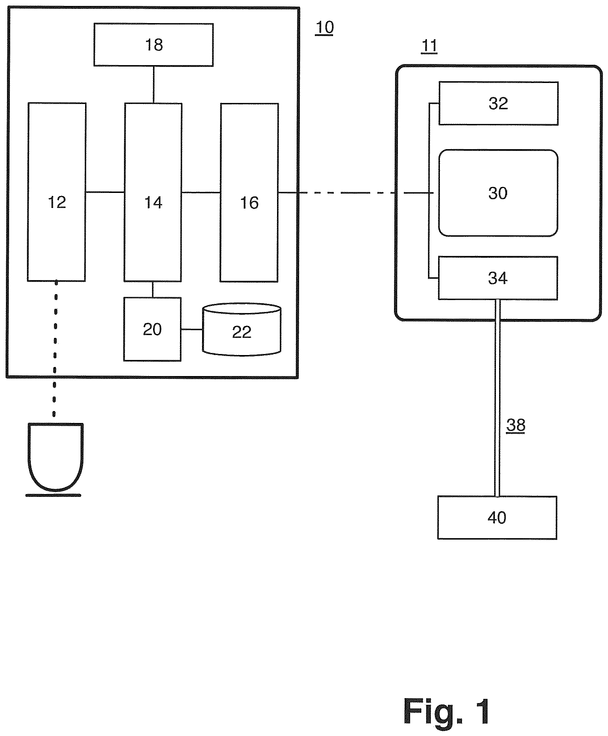

- Fig. 1: ein schematisches Blockdiagramm der erfindungsgemäßen Vorrichtung zur automatisierten Bereitung eines Heißgetränks am Beispiel eines Kaffee-Vollautomaten eines ersten Ausführungsbeispiels, im Zusammenwirken mit einem als Smartphone-Mobiltelefon ausgestalteten mobilen Endgerät als mobiler Datenverarbeitungseinheit.

Das Bezugszeichen 10 verdeutlicht im Schema-Schaubild der Fig. 1 einen Kaffeeautomaten, welcher in ansonsten bekannter Weise eine Bereitungseinheit 12 aufweist; diese erzeugt in allgemein aus dem Stand der Technik bekannter Weise aus Kaffeebohnen mittels einer Mahleinheit (geeignet parametrisierbar) Kaffeemehl, welches dann in einem nachfolgenden Schritt verbrüht und in den schematisch gezeigten Trinkbehälter ausgebracht werden kann. Mehrere dieser Vorgänge, über das Mahlen hinaus, sind geeignet parametrisierbar, etwa (im Fall mehrerer in geeigneten Magazinen vorgesehener Kaffeesorten) eine auszuwählende Kaffeebohnen- oder Kaffeemehlsorte, eine geeignete Brühdauer, eine Brühtemperatur oder dergleichen im Brühverfahren, ferner eine konkret vorzuwählende Portionsmenge des Heißgetränks oder etwa Art und Menge eines zuzuführenden Zusatzstoffes wie etwa Zucker, Süßstoff, Milch oder dergleichen. Die konkret zu konfigurierenden Möglichkeiten sind prinzipiell unbegrenzt und als solche aus dem Stand der Technik bekannt.

Im Rahmen der gezeigten Heißgetränk-Bereitungsvorrichtung 10 (der fett gezeichnete Rahmen zeigt insoweit schematisch das Innere des Vorrichtungsgehäuses) wird die Bereitungseinheit 12 angesteuert von einer zentralen Steuereinheit 14, welche, geeignet etwa programmiert mittels gängiger Mikrocontroller und darauf ablaufender Betriebssoftware, sowohl mit einer Datenkommunikationseinheit 16 im Gehäuse zusammenwirkt, als auch, insbesondere in einen ersten Betriebsmodus zur Heißgetränkebereitung durch ein Aktivierungselement 18 (hier lediglich realisiert durch einen Einzel-Taster) aktiviert werden kann.

Konkret weist die Datenübertragungseinheit 16 eine auf Hochfrequenzbasis wirkende Sender- und Empfangseinheit auf, welche in der symbolisch gezeigten Weise mit einer als Smartphone realisierten mobilen Datenverarbeitungseinheit 11, aufweisend eine berührungsempfindliche Displayeinheit 30, zusammenwirkt; typische Methoden der drahtlosen Anbindung sind etwa Funkverbindungen nach dem Bluetooth-Protokoll oder aber drahtlose Netzwerkprotokolle, wie etwa W-LAN verschiedener Standards.

Im Rahmen der Erfindung identifiziert sich die mobile Datenverarbeitungseinheit 11 gegenüber der Vorrichtung 10 bzw. der Datenkommunikationseinheit 16, etwa dergestalt, dass die Einheit 16 auf Hardwarebasis eine MAC-Adresse der Einheit 11 erfasst; ergänzend oder alternativ kann ein konkreter (visuell über das Display gestützter) Eingabe- bzw. Authentifizierungsdialog mit einer die Einheit 11 bedienenden Bedienperson erfolgen. Entsprechend liegen damit auf Seiten des Gerätes 10 mögliche Benutzerdaten vor, welche geeignet durch die der Steuereinheit 14 zugeordnete Benutzer-Individualisierungseinheit 20 verarbeitet und in einer zugeordneten Speichereinheit 22 (bevorzugt nicht-flüchtig, etwa mittels Flash-Halbleiterspeicher) abgelegt werden.

Die so identifizierte Bedienperson wird so in die Lage versetzt, auf der Schnittstelleneinheit (Display 30) eine Konfiguration bzw. Parametrisierung der Maschine 10 vorzunehmen. Zu diesem Zweck erzeugt eine Prozessführungs- und Visualisierungseinheit 32 (typischerweise als Funktionsmodul innerhalb der Mobileinheit 11 realisiert, ergänzend oder alternativ durch Daten aus der Einheit 10 unterstützt) eine geeignete visuelle, bevorzugt animierte und/oder multimediale Darstellung und Ausgabe auf der Displayeinheit 30 (ggf. unterstützt durch Audioinhalte oder weitere Medien, etwa ein Vibrationssignal), wobei bevorzugt eine derartige Visualisierung zur Bedienerführung und Erläuterung der Vorgänge sich nach den spezifischen Erfordernissen, Bedürfnissen und Interessen der Bedienperson richtet. Diese können geeignet vorkonfiguriert sein, alternativ auch automatisch aus einem Bedienverhalten der Bedienperson, etwa einem Bedienungsmuster in der Betätigung, erschlossen werden; als "benutzerindividualisiert" im Rahmen der vorliegenden Erfindung gilt dabei nicht nur eine Möglichkeit der Parametrisierung für jeden einzelnen Benutzer, vielmehr ist darunter auch eine Zuordnung zu Benutzergruppen zu verstehen, so dass insoweit sich auch die Benutzerführung auf die Zuordnung zu einer jeweiligen Benutzergruppe (etwa entsprechend einem Bedarf- oder Verständnistypus) und das entsprechende Abrufen zugeordneter Medieninhalte beschränken kann.

Bevorzugt im Rahmen des gezeigten Ausführungsbeispiels ist es zudem, über ein öffentliches Datenübertragungsnetz (schematisch als 38 gezeigt), etwa das Internet, angebundene externe Servermittel 40 Zusatzinformationen zur Anzeige auf dem Display 30 heranzuführen, welche dem Benutzer weitere Inhalte vermitteln. Derartige Zusatzdaten können wiederum multimedialer Art sein und etwa benutzerspezifisch (oder benutzergruppenspezifisch) geeignete oder interessierende Inhalte heranführen. Neben technischen Informationen können dies insbesondere produktspezifische Informationen betreffend das jeweilige Heißgetränk, zugehörige weitere Produkte oder dergleichen sein (damit prinzipiell auch Werbemaßnahmen einschließen), ergänzend oder alternativ kann der Benutzer auf diese Weise in Verkaufsförderungsaktivitäten oder soziale Medien eingebunden sein.

Die vorliegende Erfindung ist nicht auf die in der Fig. 1 lediglich exemplarisch beschriebene Ausgestaltung eines Systems beschränkt. Vielmehr ist zunächst von der Erfindung die eigentliche Bereitungsvorrichtung (insoweit entsprechend dem Gehäuse 10) umfasst, welches lediglich erfindungsgemäße Eignung zum Zusammenwirken mit einer oder einer Mehrzahl der mobilen Datenverarbeitungseinheiten 11 aufweist. Auch können diese Verarbeitungseinheiten selbst untereinander höchst unterschiedlich ausgestaltet sein, so dass ein System größtmöglicher Flexibilität und Adaptabilität entsteht.

Während zudem im Rahmen der Erfindung als bevorzugte Realisierungsform des Heißgetränks ein Kaffeegetränk herangezogen wurde, ist die vorliegende Erfindung nicht auf die Bereitung eines Kaffeegetränks beschränkt, vielmehr eignen sich auch andere Heißgetränke wie etwa Tee, Milch, Suppe, Grog oder dergleichen, wobei dann die Parametrisierung bzw. die erfindungsgemäßen gespeicherten und änderbaren Parameterdaten dem betreffenden Heißgetränk entsprechende geeignete Bereitungsvarianten und/oder Eigenschaften bedeuten.

### Bezugszeichenliste

- 10: Kaffeeautomat
- 11: Datenverarbeitungseinheit
- 12: Bereitungseinheit
- 14: Steuereinheit
- 16: Datenkommunikationseinheit
- 18: Aktivierungselement
- 20: Benutzer-Individualisierungseinheit
- 22: Speichereinheit
- 30: Displayeinheit
- 32: Prozessführungs- und Visualisierungseinheit
- 34: Zusatzdatenmittel
- 38: öffentliches Datenübertragungsnetz
- 40: Servermittel

## Patentansprüche

1. Vorrichtung zur automatisierten Bereitung eines Heißgetränks mit in einem Vorrichtungsgehäuse (10) vorgesehenen Steuermitteln, die so ausgebildet sind, dass
in einem ersten Betriebsmodus der Bereitungsvorrichtung als Reaktion auf ein bevorzugt manuelles Betätigen eines am Vorrichtungsgehäuse vorgesehenen Aktivierungselementes (18) durch eine Bedienperson die Bereitung des Heißgetränks unter Nutzung voreingestellter gespeicherter Parameterdaten erfolgt und dass in einem zweiten Betriebsmodus der Bereitungsvorrichtung die Parameterdaten durch eine Bedienperson verändert werden können, wobei dass die Steuermittel Mittel (16) zur bidirektionalen drahtlosen elektronischen Datenkommunikation mit einer gehäusextern vorsehbaren, mobilen und der Bedienperson zugeordneten Datenverarbeitungseinheit (11)
sowie Individiualisierungs- und Speichermittel (20, 22) für mindestens einen Parameterdatensatz der Parameterdaten sowie entsprechend zugehörige benutzerindividualisierenden Benutzerdaten aufweist, **dadurch gekennzeichnet, dass** die Steuermittel so ausgebildet sind, dass die Veränderung der Parameterdaten im zweiten Betriebsmodus lediglich durch die Mittel zur Datenkommunikation drahtlos herangeführter Daten erfolgt, die die Benutzerdaten einschließen,
und ein dem zweiten Betriebsmodus nachfolgender Betrieb der Bereitungsvorrichtung im ersten Betriebsmodus unter Nutzung der veränderten Parameterdaten durchgeführt wird, wobei die Individualisierungs- und Speichermittel zum Empfangen und Speichern einer Mehrzahl von Parameterdatensätzen mit jeweils zugehörigen benutzerindividualisierenden Benutzerdaten ausgebildet sind, und wobei die Mittel zur Datenkommunikation so ausgebildet sind, dass die Benutzererfassung und/oder eine Erfassung der benutzerindividualisierenden Benutzerdaten durch eine Identifikation einer zusammenwirkenden gehäuseexternen mobilen Datenverarbeitungseinheit erfolgt.

2. Vorrichtung nach Anspruch 1,
**dadurch gekennzeichnet,**
**dass** das Aktivierungselement (18) als manuell betätigbarer Taster, Schalter und/oder Knopf ausgebildet ist.

3. Vorrichtung nach Anspruch 1 oder 2,
**dadurch gekennzeichnet,**
**dass** das Vorrichtungsgehäuse keine visuellen Darstellungsmittel, insbesondere keine Displayeinheit, aufweist.

4. Vorrichtung nach einem der Ansprüche 1 bis 3,
**dadurch gekennzeichnet,**
**dass** die Steuereinheit so ausgebildet ist, dass sie den ersten Betriebsmodus jeweils nach einer Benutzererfassung und auf der Basis des entsprechenden Parameterdatensatzes durchführt.

5. Vorrichtung nach einem der Ansprüche 1 bis 4,
**gekennzeichnet durch** mindestens eine der gehäuseextern vorgesehenen Datenverarbeitungseinheiten (11), die eine zur Betätigung durch die Bedienperson ausgebildete grafische Benutzeroberfläche (30) aufweist und mit Konfigurationsmitteln so versehen ist, dass in den zweiten Betriebsmodus die Parameterdaten bevorzugt innerhalb vorbestimmter Parameterbereiche auswähl-, einstell- und/oder visualisierbar sind.

6. Vorrichtung nach Anspruch 5,
**dadurch gekennzeichnet,**
**dass** den Konfigurationsmitteln Zusatzdatenmittel (34) zugeordnet sind, die so ausgebildet sind, dass entsprechend der Betätigung durch die Bedienperson, einer Identifikation der Bedienperson und/oder einer Auswahl- oder Einstellhandlung der Bedienperson an der grafischen Benutzeroberfläche visuell darstellbare Zusatzdaten über ein bevorzugt öffentliches Datenübertragungsnetz (38), insbesondere über das Internet, herangeführt werden.

7. Vorrichtung nach Anspruch 5 oder 6,
**dadurch gekennzeichnet,**
**dass** der mindestens einen gehäuseextern vorgesehenen Datenverarbeitungseinheit Multimedia-Darstellungsmittel (32), insbesondere Mittel zur Prozess-, Ablauf- und/oder Auswahlvisualisierung, so zugeordnet sind, dass die Auswahl- und/oder Einstellungsbetätigung durch die Bedienperson entsprechend einer aktuellen Benutzeroberflächendarstellung und/oder in Abhängigkeit von den benutzerindividualisierenden Benutzerdaten erfolgen kann.

8. Vorrichtung nach einem der Ansprüche 1 bis 7,
**dadurch gekennzeichnet,**
**dass** die Mittel zur drahtlosen Datenkommunikation zur bidirektionalen Datenübertragung so ausgebildet sind, dass Ergebnis-, Fehler-, Protokoll- und/oder Betriebsmitteldaten der Steuereinheit zur Datenverarbeitungseinheit übertragen werden können, und bevorzugt mittels der Datenübertragungseinheit an eine über ein öffentliches Datenübertragungsnetz, insbesondere das Internet, angebundene Servereinheit weitergeleitet werden können.

9. Vorrichtung nach einem der Ansprüche 1 bis 8,
**dadurch gekennzeichnet,**
**dass** das Heißgetränk ein Kaffeegetränk ist und die Parameterdaten aus der Gruppe ausgewählt sind, welche Daten betreffend eine ausgewählte Kaffeebohnen- oder Kaffeemehlsorte, eine Brühdauer, eine Brühtemperatur, eine Portionsmenge, eine Mahldauer, einen Mahlgrad und/oder zuzusetzende Zusatzstoffe umfasst.

## Claims

1. A device for automatically preparing a hot beverage comprising control means provided in a device housing (10) and realized such that the hot beverage is prepared using preset stored parameter data in a first operating mode of the preparation device in reaction to a preferably manual actuation of an activation element (18) disposed on the device housing by a user
and that the parameter data can be modified by a user in a second operating mode of the preparation device, said control means comprising means (16) for bidirectionally and wirelessly communicating electronic data using a mobile data processing unit (11) provided outside of the housing and allocated to the user and individualizing and storage means (20, 22) for at least one parameter data set of the parameter data and correspondingly allocated user data individual to the user,
**characterized in that**
the control means are designed such that the parameter data are modified in the second operating mode merely via the means for communicating wirelessly supplied data including the user data and that an operation of the preparation device subsequent to the second operating mode is executed in the first operating mode using the modified parameter data, said individualizing and storage means being realized for receiving and storing a plurality of parameter data sets each having corresponding user data individual to the user and said means for communicating data being realized such that the user and/or the user data individual to the user is identified by identifying an interacting mobile data processing unit disposed outside of the housing.

2. The device according to claim 1,
**characterized in that**
the activation element (18) is realized as a manually actuatable pushbutton, switch and/or button.

3. The device according to claim 1 or 2,
**characterized in that**
the device housing does not have visual depiction means, in particular no display unit.

4. The device according to any one of the claims 1 to 3,
**characterized in that**
the control unit is realized such that it executes the first operating mode after having identified the user as well as based on the corresponding parameter data set in every instance.

5. The device according to any one of the claims 1 to 4,
**characterized by**
at least one of the data processing units (11) disposed outside of the housing, said at least one data processing unit (11) comprising a graphic user interface (30) realized for being actuated by the user and is provided with configuration means in such a manner that the parameter data can be selected, set and/or visualized in the second operating mode preferably within predefined parameter areas.

6. The device according to claim 5,
**characterized in that**
supplementary-data means (34) are allocated to the configuration means and are realized such that supplementary data visually representable at the graphic user interface are supplied via a preferably public data transfer network (38), in particular via the Internet, according to the actuation by the user, an identification of the user and/or a selection or settings action by the user.

7. The device according to claim 5 or 6,
**characterized in that**
multimedia representation means (32), in particular means for process, sequence and/or selection visualization, are allocated to the at least one data processing unit, which is disposed outside of the housing, such that the selection and/or settings actuation by the user can take place based on a current user interface depiction and/or as a function of the user data individual to the user.

8. The device according to any one of the claims 1 to 7,
**characterized in that**
the means for wirelessly communicating data for bidirectionally transferring data are realized such that result, error, protocol and/or operation means data of the control unit can be transferred to the data processing unit and can be forwarded to a server unit connected via a public data transfer network, in particular the Internet, preferably by means of the data transfer unit.

9. The device according to any one of the claims 1 to 8,
**characterized in that**
the hot beverage is a coffee beverage and the parameter data are selected from the group which comprises data regarding a selected coffee bean or ground coffee type, a brewing time, a brewing temperature, a serving size, a grinding time, a grinding degree and/or additives to be added.

## Revendications

1. Dispositif pour la préparation automatique d'une boisson chaude ayant des moyens de commande prévus dans un boîtier de dispositif (10), lesdits moyens de commande étant réalisés de telle manière que dans un premier mode de fonctionnement du dispositif de préparation, la préparation de la boisson chaude s'effectue sous utilisation des données de paramètres préréglées et stockées en réaction à un actionnement, de préférence manuel, d'un élément d'activation (18) prévu au boîtier de dispositif par un opérateur et que dans un deuxième mode de fonctionnement du dispositif de préparation, les données de paramètres peuvent être changées par un opérateur, lesdits moyens de commande comprenant des moyens (16) pour la communication de données bidirectionnelle, électronique et sans fil ayant une unité de traitement de données (11) mobile, pouvant être prévue à l'extérieur du boîtier et associée à l'opérateur, et lesdits moyens de commande comprenant des moyens d'individualisation et de stockage (20, 22) pour au moins un ensemble de données de paramètres des données de paramètres de même que des données d'utilisateur associées correspondantes individualisant l'opérateur,
**caractérisé en ce que**
les moyens de commande sont réalisés de telle manière que le changement des données de paramètres dans le deuxième mode de fonctionnement s'effectue uniquement par les moyens pour la communication de données fournies sans fil, lesdites données fournies sans fil incluant les données d'utilisateur,
et un fonctionnement du dispositif de préparation dans le premier mode de fonctionnement est effectué suivant au deuxième mode de fonctionnement sous utilisation des données de paramètres changées, lesdits moyens d'individualisation et de stockage étant réalisés pour recevoir et stocker une pluralité d'ensembles de données de paramètre ayant chacun des données d'utilisateur associées individualisant l'utilisateur, et les moyens pour la communication de données étant réalisés de telle manière que l'enregistrement d'utilisateur et/ou la saisie des données d'utilisateur qui individualisent l'utilisateur s'effectue par une identification d'une unité de traitement de données mobile coopérante à l'extérieur du boîtier.

2. Dispositif selon la revendication 1,
**caractérisé en ce que**
l'élément d'activation (18) est réalisé comme manipulateur, interrupteur et/ou bouton qui peut être actionné de manière manuelle.

3. Dispositif selon la revendication 1 ou 2,
**caractérisé en ce que**
le boîtier de dispositif ne comprend pas de moyens d'affichage visuels, en particulier pas d'unité d'écran.

4. Dispositif selon l'une quelconque des revendications 1 à 3,
**caractérisé en ce que**
l'unité de commande est réalisée de telle manière qu'elle effectue le premier mode de fonctionnement à chaque fois après un enregistrement d'utilisateur et sur la base de l'ensemble de données de paramètres correspondant.

5. Dispositif selon l'une quelconque des revendications 1 à 4,
**caractérisé par** au moins une des unités de traitement de données (11) prévue à l'extérieur du boîtier qui comprend une interface utilisateur (30) graphique réalisée pour l'actionnement par l'opérateur et qui est pourvue de moyens de configuration de telle manière que dans le deuxième mode de fonctionnement, les données de paramètres peuvent être choisies, réglées et/ou visualisées de préférence dans des gammes de paramètres prédéterminées.

6. Dispositif selon la revendication 5
**caractérisé en ce que**
des moyens de données additionnelles (34) sont associés aux moyens de configuration, lesdits moyens de données additionnelles (34) étant réalisés de telle manière que des données additionnelles qui peuvent être présentées de manière visuelle sont fournies, à travers un réseau de transmission de données (38), de préférence public, en particulier par Internet, correspondant à l'actionnement par l'opérateur, à une identification de l'opérateur et/ou à une action de choix ou de réglage de l'opérateur sur l'interface utilisateur graphique.

7. Dispositif selon la revendication 5 ou 6,
**caractérisé en ce que**
des moyens d'affichage multimédia (32) sont associés à l'au moins une unité de traitement de données prévue à l'extérieur du boîtier, en particulier des moyens pour la visualisation du procès, du déroulement et/ou du choix, de telle manière que l'actionnement de choix et/ou de réglage par l'opérateur peut être effectué selon une présentation actuelle de l'interface utilisateur et/ou en fonction des données d'utilisateur qui individualisent l'utilisateur.

8. Dispositif selon l'une quelconque des revendications 1 à 7,
**caractérisé en ce que**
les moyens pour la communication de données sans fil pour la transmission de données bidirectionnelle sont réalisés de telle manière que des données de résultat, des données d'erreurs, des données de protocole et/ou des données d'équipement de l'unité de commande peuvent être transmises à l'unité de traitement de données et peuvent être transmises à une unité de serveur connectée par un réseau de transmission de données public, en particulier l'Internet, de préférence au moyens de l'unité de transmission de données.

9. Dispositif selon l'une quelconque des revendications 1 à 8,
**caractérisé en ce que**
la boisson chaude est une boisson à café et les données de paramètres sont choisies du groupe qui comprend des données concernant une sorte choisie de grain de café ou de farine de café, une durée de percolation, une température de percolation, une quantité de portion, une durée de mouture, un degré de mouture et/ou des additifs à ajouter.
